(19) **Europäisches Patentamt / European Patent Office / Office européen des brevets**

(11) **EP 4 219 261 B1**

(12) **EUROPEAN PATENT SPECIFICATION**

(45) Date of publication and mention of the grant of the patent:
**18.09.2024 Bulletin 2024/38**

(21) Application number: **22154072.7**

(22) Date of filing: **28.01.2022**

(51) International Patent Classification (IPC):
**B60W 60/00** (2020.01)     **G06F 30/27** (2020.01)

(52) Cooperative Patent Classification (CPC):
**B60W 60/0015; G06F 8/20;** B60W 2556/20

(54) **ESTIMATION OF RISK EXPOSURE FOR AUTONOMOUS VEHICLES**

SCHÄTZUNG DER RISIKOEXPOSITION FÜR AUTONOME FAHRZEUGE

ESTIMATION DE L'EXPOSITION AU RISQUE POUR LES VÉHICULES AUTONOMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Zenseact AB**
**417 56 Göteborg (SE)**

(72) Inventors:
• **GYLLENHAMMAR, Magnus**
  **435 43 Pixbo (SE)**
• **ZANDÉN, Carl**
  **437 38 Lindome (SE)**
• **KHORSAND VAKILZADEH, Majid**
  **431 66 Mölndal (SE)**

(74) Representative: **Zacco Sweden AB**
**P.O. Box 5581**
**Löjtnantsgatan 21**
**114 85 Stockholm (SE)**

(56) References cited:
**EP-A1- 3 895 950**          **EP-A1- 3 940 487**
**DE-A1- 102012 009 297**    **DE-A1- 102020 109 662**
**US-A1- 2019 354 643**

• **WARG FREDRIK ET AL: "The Quantitative Risk Norm - A Proposed Tailoring of HARA for ADS", 2020 50TH ANNUAL IEEE/IFIP INTERNATIONAL CONFERENCE ON DEPENDABLE SYSTEMS AND NETWORKS WORKSHOPS (DSN-W), IEEE, 29 June 2020 (2020-06-29), pages 86 - 93, XP033800403, DOI: 10.1109/DSN-W50199.2020.00026**
• **DEEPIKA ANANTHA PADMANABAN: "Identification of Fundamental Driving Scenarios Using Unsupervised Machine Learning", 4 December 2020 (2020-12-04), XP002807120, Retrieved from the Internet <URL:https://www.diva-portal.org/smash/get/diva2:1521116/FULLTEXT01.pdf> [retrieved on 20220719]**

**Description**

TECHNICAL FIELD

The present invention relates to automated driving systems, and in particular to risk estimation for vehicles equipped with an automated driving system.

BACKGROUND

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

ADS features as described above are, however, bound to be required to function with a high integrity to provide sufficiently low risk for the vehicle occupant(s) as well as their surrounding environments. Ensuring that the risk is sufficiently low may require intractable amounts of data for statistical proofs, and would, according to an example, take e.g. approximately a hundred vehicles to drive continuously for five centuries, to acquire. There are several approaches to minimize the risk of the ADS features before they are launched onto public roads.

Assuring the safety of automated driving systems (ADSs) is one of the central challenges in being able to release such systems to the market. Safety can be viewed as the absence of risk and this is also one of the most tractable ways of viewing it. It will be impossible to prove that there will be zero accidents (i.e. 100% safe), but it can be proven that the risk of an accident is less than, let's say, $10^{-8}$ (i.e. likelihood of an accident is less than once in $10^8$ hours of driving) with a certain confidence in these estimates. Although, to get to such numbers there is a need for a huge amount of data from a large number of driven kilometres. The risk for crashes (or other incidents) can then be inferred using this data.

To estimate whether a complex autonomous feature complies with the safety norm for different severity levels is not a simple task, and brute force methods are arguably proven unfeasible (Kalra & Padock, 2016). There is therefore a need for improvements in the art for verifying and developing autonomous features in the automotive industry, and in particular, there is a need for new solutions that are reliable and efficient while providing a more detailed result for further analysis.

EP 3 940 487 A1 discloses a computer-implemented method and processing system for estimating a probability of failure for different severity levels for an Automated Driving System (ADS) feature in a virtual test environment. In more detail, the embodiments disclosed therein enable the estimation of a probability of crash of different severities, by utilizing a limit state function (LSF) that attains increasingly negative or positive values after crash (e.g. when TTC = 0 or PET = 0).

The paper "The Quantiative Risk Norm - A proposed Tailoring of HARA for ADS" by Warg et al. discloses a hazard analysis and risk assessment (HARA) framework that is tailored for an ADS using a quantitative risk norm (QRN) with consequence classes, where each class has a limit for the frequency within which the consequences may occur. Incident types are then defined and assigned to the consequence classes.

SUMMARY

It is therefore an object of the present invention to provide a solution for estimating a risk exposure of a vehicle equipped with an automated driving system (ADS) in a virtual test environment that alleviates all or at least some of the drawbacks of presently known solutions.

This object is achieved by means of a computer-implemented method, a computer-readable storage medium, a processing system, a remote server, and a cloud environment as defined in the appended independent claims. The term exemplary is in the present context to be understood as serving as an instance, example or illustration.

According to a first aspect of the present invention, there is provided a computer-implemented method for estimating a risk exposure of a vehicle equipped with an automated driving system (ADS) in a virtual test environment. The method comprises obtaining input data comprising:

- At least one candidate state of the vehicle, wherein each candidate state comprises a set of candidate state parameters of the vehicle.
- At least one predicted scene of the surrounding environment of the vehicle at each candidate state, wherein each predicted scene comprises a set of scene parameters of the surrounding environment of the vehicle and a scene probability metric of the scene occurring at an associated candidate state.
- At least one event for each predicted scene, wherein each event comprises an event probability metric of the event occurring in the predicted scene and a set of event parameters of each event.
- A set of risk thresholds, wherein each risk threshold defines a predefined allowable frequency of occurrence of each of a plurality of predefined incidents, wherein each predefined incident defines a potential traffic incident that the vehicle could be exposed to during a predicted temporal development of each event.

Further, the method comprises estimating a probability of each predefined incident occurring in the virtual test environment by running a probabilistic reliability method on each set of candidate state parameters, each set of scene parameters, the scene probability metric for each set of scene parameters, the set of event parameters, and the event probability metric for each set of event parameters. Then, for each candidate state that is associated with a predefined incident occurring with a probability exceeding the predefined allowable frequency of occurrence for that incident, the method comprises determining that candidate state as a high-risk state for the vehicle. Similarly, for each candidate state that is associated with a predefined incident occurring with a probability below the predefined allowable frequency of occurrence for that incident, the method comprises determining that candidate state as an acceptable-risk state for the vehicle.

According to a second aspect of the present invention, there is provided a (non-transitory) computer-readable storage medium storing one or more programs configured to be executed by one or more processors of a processing system, the one or more programs comprising instructions for performing the method according to any one of the embodiments disclosed herein. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present invention, there is provided a processing system for estimating a risk exposure of a vehicle equipped with an automated driving system (ADS) in a virtual test environment. The processing system comprises control circuitry that is configured to obtain input data comprising:

- At least one candidate state of the vehicle, wherein each candidate state comprises a set of candidate state parameters of the vehicle.
- At least one predicted scene of the surrounding environment of the vehicle at each candidate state, wherein each predicted scene comprises a set of scene parameters of the surrounding environment of the vehicle and a scene probability metric of the scene occurring at an associated candidate state.
- At least one event for each predicted scene, wherein each event comprises an event probability metric of the event occurring in the predicted scene and a set of event parameters of each event.
- A set of risk thresholds, wherein each risk threshold defines a predefined allowable frequency of occurrence of each of a plurality of predefined incidents, wherein each predefined incident defines a potential traffic incident that the vehicle could be exposed to during a predicted temporal development of each event.

Further, the control circuitry is configured to estimate a probability of each predefined incident occurring in the virtual test environment by running a probabilistic reliability method based on each set of candidate state parameters, each set of scene parameters, the scene probability metric for each set of scene parameters, the set of event parameters, and the event probability metric for each set of event parameters. Then, for each candidate state that is associated with a predefined incident occurring with a probability exceeding the predefined allowable frequency of occurrence for that incident, the control circuitry is configured to determine that candidate state as a high-risk state for the vehicle. Similarly, for each candidate state that is associated with a predefined incident occurring with a probability below the predefined allowable frequency of occurrence for that incident, the control circuitry is configured to determine that candidate state as an acceptable-risk state for the vehicle. With this aspect of the invention, similar advantages and preferred features are present as in the previously discussed first aspect of the invention.

Further, according to a fourth aspect of the present invention there is provided a (remote) server comprising the processing system according to any one of the embodiments disclosed herein. With this aspect of the invention, similar advantages and preferred features are present as in the previously discussed first aspect of the invention.

Further, according to a fifth aspect of the present invention, there is provided a cloud environment comprising one or more (remote) servers according to any one of the embodiments disclosed herein. With this aspect of the invention, similar advantages and preferred features are present as in the previously discussed first aspect of the invention.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

BRIEF DESCRIPTION OF THE DRAWINGS

Further objects, features and advantages of embodiments of the invention will appear from the following detailed description, reference being made to the accompanying drawings, in which:

Fig. 1 is a schematic flow chart representation of a computer-implemented method for estimating a risk exposure of a vehicle equipped with an automated driving system (ADS) in a virtual test environment in accordance with some embodiments.

Fig. 2 is a schematic flow chart representation of a computer-implemented method for estimating a risk exposure of a vehicle equipped with an automated driving system (ADS) in a virtual test environment in accordance with some embodiments.

Figs. 3a - 3c are schematic top-view illustrations of a vehicle on a road portion in some example scenarios in accordance with some embodiments.

Fig. 4 is a schematic top-view illustration of a vehicle on a road portion illustrating an example effect on a path planning module in accordance with some embodiments.

Fig. 5 is a schematic block diagram representation of a processing system for estimating a risk exposure of a vehicle equipped with an automated driving system (ADS) in a virtual test environment in accordance with some embodiments.

Fig. 6 is a schematic block diagram representation of a processing system for estimating a risk exposure of a vehicle equipped with an automated driving system (ADS) in a virtual test environment in accordance with some embodiments.

Fig. 7 is a schematic block diagram representation of a manifold finder module depicting the different iteration levels in accordance with some embodiments.

Fig. 8 is a schematic top-view illustration of a vehicle on a road portion illustrating an example scene that is simulated in a virtual test environment in accordance with some embodiments.

Fig. 9 is a schematic top view illustration of a risk map with some of the different components contributing to the risk map in accordance with some embodiments.

DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), Field Programmable Gate Arrays (FPGA) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

**OVERVIEW**

As mentioned in the foregoing, assuring safety of automated driving systems (ADSs) is one of the central challenges in being able to release such systems to the market. Since the approach of statistical brute force validation is generally considered to be infeasible, there is a need for more refined methods. Other alternatives include formal methods, where the ADS is proven to be safe given certain sets of assumptions about its operational environment. For example, there have been some attempts to mitigate this problem by for example providing a method for computing invariably safe states for motion planning of autonomous vehicles, but in general such solutions do so under the assumptions of rule-behaving traffic and without additional uncertainties.

However, the present inventors realized that in many cases the potential safety risks that an ADS will face are from situations that are not within the frameworks defined by common traffic rules or even within the frameworks defined by conventional driving scenarios, but rather what is called corner cases or edge cases. These cases could include vulnerable road users (VRUs) appearing either on the perception border (i.e. at the periphery of the capabilities of the ADS's perception system) or from an occluded state that the ADS cannot perceive. Other such cases include very aggressive driving or unexpected/irrational driving manoeuvres from nearby traffic participants or adverse weather/road conditions.

Thus, in order to better estimate the risk exposure of the ADS, one should account for the risks associated with the currently perceived and predicted states of both the own vehicle (i.e. ego-vehicle) as well as the currently perceived and predicted states of surrounding objects (e.g. other vehicles). Further, it is herein proposed that the risk associated with the presence of perceived objects making unexpected/irrational decisions and with the prediction of presence of non-perceived objects is included together with the estimated and predicted capabilities of the ego-vehicle's ADS.

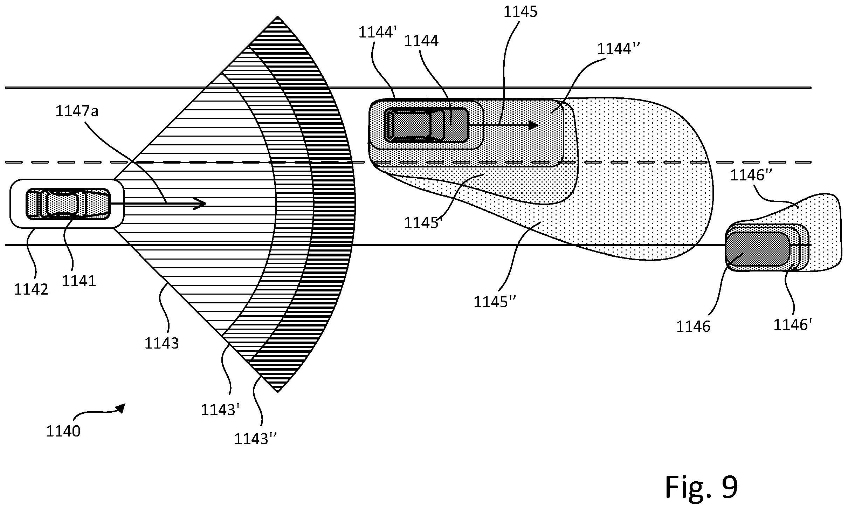

These metrics may for example be estimated by constructing a "risk map" of the surrounding environment of the ADS-equipped vehicle. In the present context, a risk map estimates and quantifies a view of the "risk" across the ADS's surrounding (i.e. of the ego-vehicle's surroundings), and preferably includes sensor capabilities, uncertainties in detections and predictions as well as uncertainties in the available capabilities of the vehicle platform (e.g. braking capability, steering capability, capability of the ADS, and so forth). In more detail, the risk estimate that is obtained from the risk map is not dependent on any intermediary threat measure or similar (such as e.g. Brake Threat Number). Instead it may be understood as a direct estimate of the risk based on a number of models underpinning the worldview of the ADS (the "worldview" of the ADS may be understood as the perceived reality of the ADS using sensor data, map data, etc.), as well as on an estimate of the ADS's own capabilities. Further, this approach provides a continuous measure between no risk and crash as opposed to other existing methods to evaluate the performance of automated/autonomous vehicles, which are of more binary nature. Further details regarding the risk map are provided in reference to Fig. 9 below.

Moreover, the present inventors realized that in order to further improve the estimation of the risk exposure of an ADS, one must account for the "second order risk", i.e. the risk which an adverse event imposes on the ADS-equipped vehicle while accounting for the ADS's capability of avoiding an incident (e.g. near-collision or collision) should the adverse event take place.

In the present context, these "second order risks" may for example occur during events where there is a risk of an incident (e.g. collision) with an object that is "perceived" by the ADS of the vehicle but which makes a rare or an unexpectedly aggressive action, or where there is a risk of an incident with a "non-perceived objects". In the present context, "non-perceived objects" may for example be objects that are occluded or outside of the limit of the field of view of the ADS's perception capabilities. The term "incident" as used herein refers to a collision (of different severity levels as given by an applicable standard or equivalent agreement) or a near-collision (i.e. the ADS managed to avoid a collision but violated one or more predefined safety margins or safety thresholds).

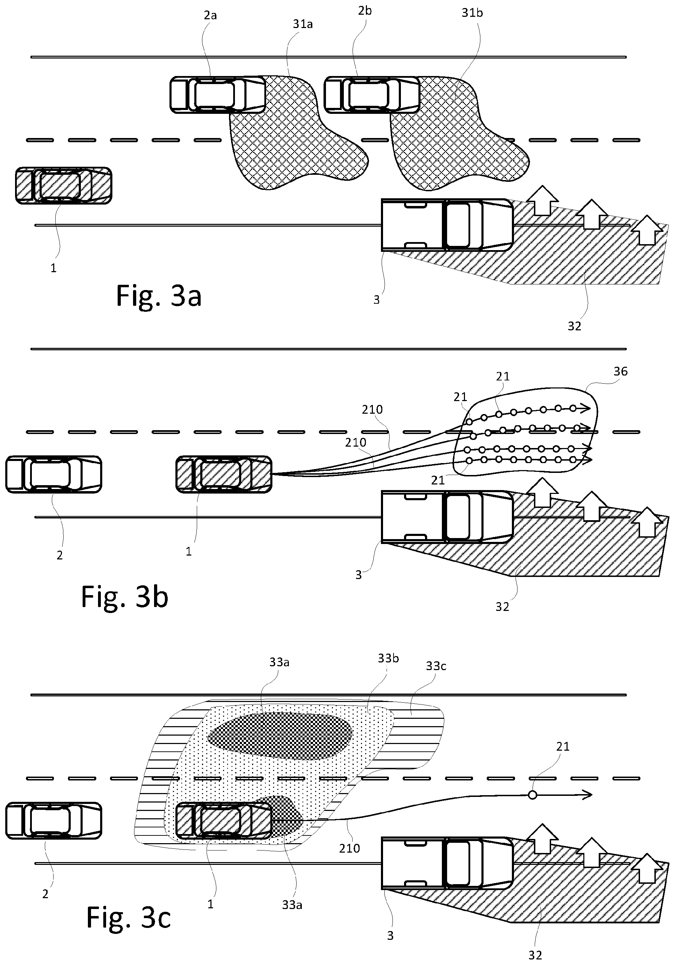

Fig. 3a is a schematic top-view illustration of a vehicle 1 traveling on a road portion, depicting these two types of "events". In more detail, the ego-vehicle 1 is traveling behind two other vehicles 2a and 2b, where the shaded areas 31a, 31b schematically illustrate the potential actions that are used to estimate the second order risk. Moreover, there is a stationary vehicle 3 situated on the road shoulder or edge of the road portion, where the occluded area 32 in front of the stationary vehicle 3 may lead to the other event where non-perceived objects may appear. In other words, Fig. 3a illustrates two types of events that are considered for second order risks - one event that is associated with objects that are perceived by the ADS, and another event associated with risks related to occlusions or on the perception limits of the ADS.

A "second order risk" for the above-mentioned first example event/situation (perceived object making unexpected actions) may in the present context be understood as: Given a certain relative position to a perceived object - what is the probability of a certain incident (i.e. failure) associated with a certain set of actions from the perceived object(s) and their respective probabilities as well as the response of the ADS to each of these situations.

Therefore, by accounting for the interaction between the ADS and the potentially hazardous object, and furthermore, by including the capability of the ADS to make "correct" decisions so to avoid any incidents with the potentially hazardous object, a more accurate estimation of the ADS's risk exposure in various scenarios can be provided. Consequently, it is possible to deduce which states (e.g. positions, headings, speeds, etc.) of the ADS-equipped vehicle that can be considered "high-risk" or "acceptable-risk" for any simulated event. With this knowledge, it is then possible to update and configure various models underpinning the decision-process of the ADS to build safer and/or more performant systems.

In other words, by means of the embodiments of the invention described herein, an enhanced estimate of the risk exposure of ADS-equipped vehicles is achievable by using an elaborate simulation system where the viable/possible/wanted states of the ADS as well as the models of each applicable event are considered. The computer-implemented method and processing system as proposed herein further improve the knowledge of the performance of the ADS in different situation and may for example be utilised to improve the operational reliability in terms of safety and/or as a means to reduce unnecessary safety margins during design and development of the ADS. In reference to the latter, a more comfortable autonomous driving experience is readily achievable. In particular, the herein proposed solution provides an enhanced estimate of the set of states that the decision making module/component of the ADS should avoid in order to uphold the agreed safety/risk level of the ADS.

## RISK MAP

Turning to Fig. 9, there is provided a schematic top view illustration of a risk map 1140 with some example components 1141 - 1146" contributing to the risk map 1140 in accordance with some embodiments of the present invention. Furthermore, a planned path for execution 1147a-c of the ego-vehicle is indicated in the map 1140.

In more detail, the risk map 1140 comprises information indicative of an actuation capability of the vehicle and is exemplified in Fig. 9 as an estimated braking capacity of the vehicle 1143 including uncertainty estimation 1143', 1143" of the same. The actuation capability of the vehicle may for example include one or more actuation parameters such as e.g. braking capacity, maximum steering angle, maximum acceleration capability, etc. and further include an uncertainty estimate for each parameter. The actuation capability and the associated uncertainty estimate(s) may be determined in real-time based on a predefined model given one or more real-time variables such as e.g. a speed of the vehicle, an acceleration of the vehicle, vehicle properties (vehicle dimensions, vehicle weight, etc.), road surface properties, and so forth, as readily understood by the skilled person in the art. The uncertainty estimates may be derived from predefined statistical models associated with each actuation parameters, where the actuation capability is given by the mean or mode value and the uncertainty estimate is given by e.g. one or two standard deviations above or below the mean.

Further, the risk map 1140 may comprise a geographical position 1141 of the ego-vehicle in the map (as deduced from a candidate state of the vehicle), the uncertainty estimation 1142 of the geographical position 1141, a position of external objects 1144, 1146, uncertainties of the position of the external objects 1144', 1144", 1146', trajectories 1145 of dynamic objects 1144 and uncertainties 1145' 1145" of the trajectories 1145. The estimated geographical position 1141 of the vehicle and the uncertainty estimates 1142 related thereto are comprised in the candidate state of the ego-vehicle, while the estimates related to the external objects 1144 and uncertainty estimates related thereto are comprised in the predicted scene of the surrounding environment.

The estimated uncertainties may for example be computed based on models (predefined or self-learning/Machine-learning models or algorithms) that define a tolerance or error-margin in the measurements provided from the sensors of a vehicle (e.g. cameras, radar, LiDAR, ultrasonic sensors, etc.). Thereby, the formed risk map 1140 also accounts for uncertainties inherent in such measurements of the vehicle's worldview caused by for example, sensor manufacturing tolerances, noise, and so forth. Accordingly, the whole risk estimation is rendered more accurate and reliable, more accurately reflecting the actual risk exposure of the ADS of the vehicle. The terms "risk exposure of the ADS" and "risk exposure of the vehicle" are herein used interchangeably.

In short, the risk map 1140 provides an exemplary means to evaluate a "candidate state" of the vehicle in accordance with some embodiments. The risk map 1140 may be formed based on an estimated actuation capability/capabilities (including their uncertainties) and an estimation of the location of free-space areas (including their uncertainties). The free-space areas may for example be derived from sensor data of one or more vehicle-mounted sensors configured to monitor the surrounding environment of the vehicle. Nevertheless, the sensor data may also originate from other sensors in the vicinity of the vehicle, e.g. sensors mounted on other vehicles or on infrastructure elements and obtained via a V2V or V2X communication network.

Free-space areas may in the present context be understood as areas in the surrounding environment of the ego-vehicle absent of objects (e.g. other vehicles, pedestrians, barriers, animals, bicycles, static objects, etc.). Thus, the obtained/determined/estimated location of free-space areas may be understood as estimates of areas absent of external objects (static and dynamic objects) as well as an estimate of the uncertainty of this determination, i.e. the likelihood of the determined location of the free-space area actually being true.

Moreover, in some embodiments, the location of free-space areas comprises a position of external objects located in the surrounding environment of the ego-vehicle. The estimated position of the external objects may include uncertainties of the position of the external objects, estimated trajectories of any dynamic objects of the external objects and uncertainties of the estimated trajectories of the dynamic objects. However, in some embodiments the location of free-space areas is determined by a dedicated module of the vehicle, where the dedicated module is configured to obtain sensor data indicative of the surrounding environment of the vehicle, and to derive the location of the free-space areas with respect to the vehicle based on the sensor data. Thus, there does not have to be an intermediate step or layer where objects are detected before the location of the free-space areas is obtained, i.e. the "free-space area" may be obtained directly. For example, a signal emitted by a Lidar may propagate through space for a certain distance before it is reflected from some surface, then this area between the Lidar and the surface may be defined as a "free-space area" without any operation or step to define the surface that the signal was reflected from.

Further, the risk map 1140 comprises a risk parameter for each of a plurality of area segments comprised in the surrounding environment of the ego-vehicle. The area segments may for example be defined by cells of an overlaid virtual grid (not shown). Thus, one can utilize the ADS's readily available functionality of estimating the "free space" in the surrounding area of the ego-vehicle and the functionality of estimating the operating capabilities of the vehicle platform (both of which are generally used for making decisions and controlling the vehicle), and then use this functionality in order to generate a risk map 1140.

Each risk parameter may for example be indicative of a probability of an accident event or of a probability of violating any predefined safety margin or threshold if the vehicle were to occupy an associated area segment, or more specifically for a candidate state of the vehicle to occupy that area segment. In a simplified example, if a first area segment is completely within an area occupied by an external vehicle, then that first area segment may have a risk parameter indicating that the first area segment is a "high risk" segment. This is at least partly based on the logical reasoning that if the vehicle where to occupy that area segment, one can assume that there is a relatively high probability of collision with the external vehicle. Analogously, if a second area segment is completely within a drivable road segment void of any external objects, then that second area segment may have a risk parameter indicating that the second area segment is a "low risk" segment.

The term "probability of violating a predefined safety margin or threshold" may for example be an estimate of a probability of violating a predefined minimum distance to other vehicles or other objects. Thus, given some statistical model indicative of certain scenarios occurring in the operational design domain (ODD) of the vehicle, one can estimate the probability of an external vehicle performing an unexpected manoeuvre which would cause a violation of the predefined minimum distance to a lead vehicle, and also estimate the probabilities of this specific action taking place on various scenarios. In other words, the risk parameters does not necessarily have to indicate a probability of an accident event, but may be defined on other metrics such as exemplified above. Other examples include other quality metrics such as distance to road edge, magnitude of jerk (e.g. lateral acceleration), and so forth.

In summary, the risk map 1140 is constructed by incorporating the risks associated with the currently perceived and predicted states of both the ego-vehicle 1141 as well as surrounding objects 1144, 1146. Further, the risk associated the presence and prediction of presence of (currently) non-perceived objects are included as well as the estimated and predicted capabilities of the ADS-equipped ego-vehicle.

Thus, the risk map 1140 readily provides an estimate of the probability of the aforementioned events occurring that are associated with the "second order risks", i.e. the probability of an incident with an object that the ADS perceives but which makes a rare or aggressive action and the probability of an incident with non-perceived objects that might be present but occluded or on the limit of the field of view of the ADS. However, the interaction between the ADS and the erratic/unexpected objects are not inherently encoded in the risk map, and it is an object of the present invention to account for this interaction as well in the overall risk estimate. Further details related to the formation and utilization of a "risk map" are provided in European Patent Application No. 20196794.0, incorporated herein by reference.

It should be noted that even though the above description in reference to the risk map pertains to a real-time or run-time formation of a risk map, it goes without saying that the risk map may be constructed offline or in "design-time" based on stored sensor data from one or more vehicles. Alternatively, the run-time constructed risk maps may be stored (in a local memory device of the vehicle or a remote memory device accessible by the vehicle). Either way, the stored sensor data or the stored risk maps may then be used offline for the purpose of obtaining the candidate states, predicted scenes and relevant events for performing the methods as taught herein.

Moreover, in some cases the risk map may be formed based on completely synthetic "sensor data", i.e. based on a synthetic or "made-up" worldviews. However, in such realizations, the underlying models (e.g. vehicle motion models) that are used to estimate the risk parameters, still remain valid. As the skilled person readily realizes, in the synthetic realization, the geographical position of the ego-vehicle may be of less relevance as compared to the ego-vehicle location relative to other objects (e.g. landmarks, other vehicles, etc.).

## ESTIMATION OF RISK EXPOSURE OF AN ADS-EQUIPPED VEHICLE

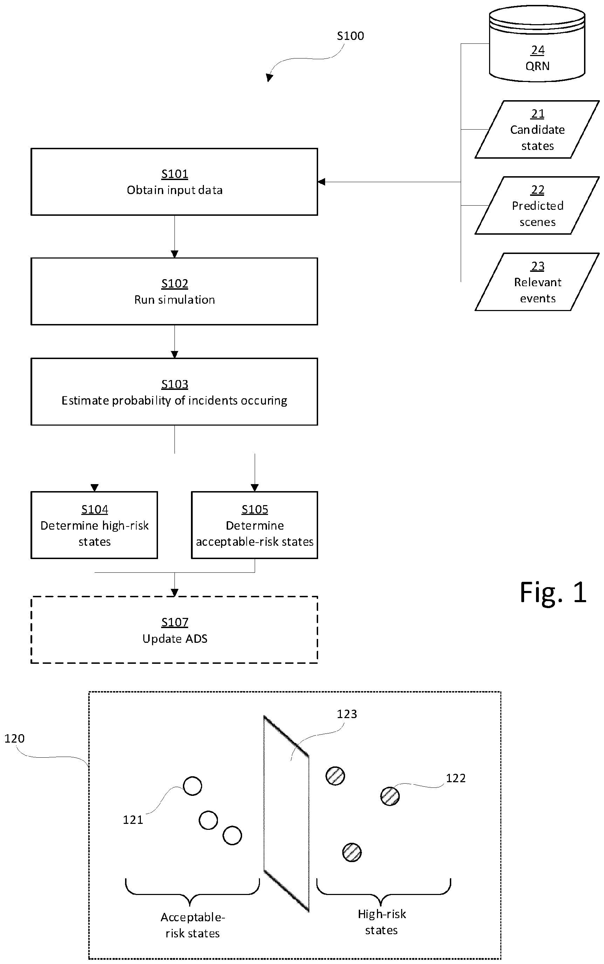

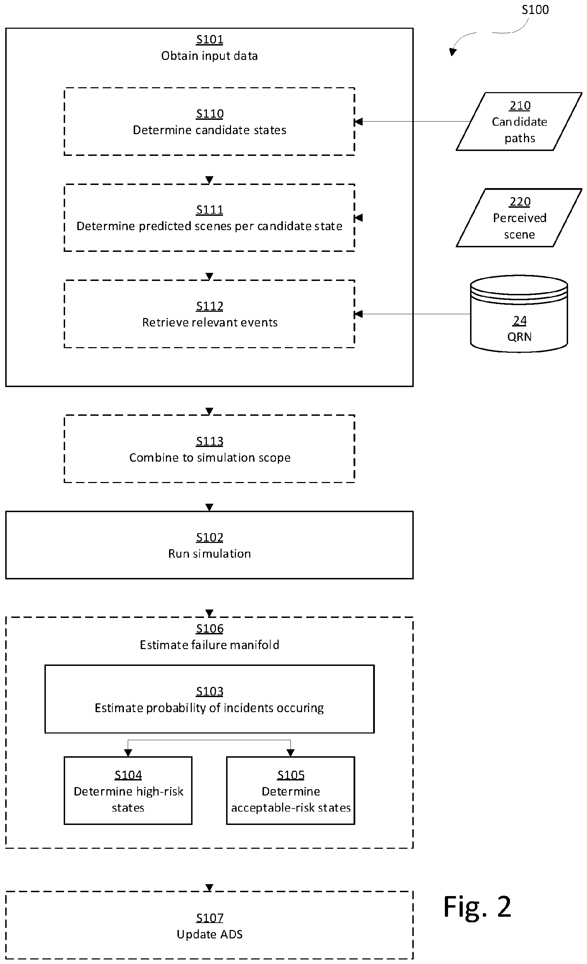

Figs. 1 and 2 are schematic flow chart representations of a method S100 for estimating a risk exposure of a vehicle equipped with an automated driving system (ADS) in a virtual test environment in accordance with some embodiments. The method S100 is preferably implemented as one or more programs comprising instructions for performing the method, where the one or more programs are configured to be executed by one or more processors of a processing system. In contrast to Fig. 1, Fig. 2 contains some additional optional steps in accordance with some embodiments which may be included individually or in various combinations.

The method S100 comprises obtaining S101 input data comprising one or more candidate states 21 of the vehicle, at least one predicted scene 22 of the surrounding environment of the vehicle at each candidate state, at least one event 23 for each predicted scene, and a set of risk thresholds. The risk thresholds may be defined by a Quantitative Risk Norm (QRN) stored in a database. Moreover, the one or more events 23 may also be derived based on information comprised in the QRN. Generally, a set may in the present context to be understood as "one or more". The term obtaining is herein to be interpreted broadly and encompasses receiving, retrieving, collecting, acquiring, deriving, determining, and so forth.

In more detail, the candidate states 21 may be understood as potential/achievable/planned states of the ego-vehicle, where each candidate state 21 comprises a set of candidate state parameters of the ego-vehicle. In other words, the candidate states 21 may be understood as states that are under consideration in a planning stage. The candidate state parameters may include one or more of a geographical position of the vehicle, a heading of the vehicle, an ADS configuration of the vehicle, an actuation capability of the vehicle, vehicle dimensions, and a vehicle weight.

In some embodiments, the ADS configuration of the vehicle comprises information about the capabilities of the ADS, for example capabilities in terms of how the ADS is configured to handle certain traffic scenarios should they occur. In more detail, the ADS configuration may be indicative of the capabilities of the ADS for handling a traffic scenario where a nearby external vehicle unexpectedly cuts-in in front of the ego-vehicle at a distance of 5 meters in front of the ego-vehicle while the ego-vehicle is traveling at a speed of 100 km/h. Here, the ADS may be configured to slow down with a certain deceleration in order to increase the distance to the external vehicle, to switch to a nearby lane, or move to the road shoulder and stop the ego-vehicle, and so forth depending on the specific scenario (which includes positions and predicted actions of other dynamic objects). Similarly, the ADS configuration may be indicative of the capabilities of the ADS for handling a traffic scenario where a moose or deer suddenly jumps out on the road 30 meters in front of the vehicle while the ego-vehicle is traveling at a speed of 80 km/h. Here, the ADS may be configured to initiate an emergency brake manoeuvre, to steer around the moose or deer while decelerating in a controlled manner, to estimate the trajectory of the moose or deer and act accordingly, and so forth depending on the specific scenario (which includes positions and predicted actions of other dynamic objects).

The actuation capability of the vehicle may for example include one or more actuation parameters such as e.g. braking capacity, maximum steering angle, maximum acceleration capability, etc. including an uncertainty estimate for each parameter. The actuation capability may be derived from sensor data may for example be obtained from vehicle-mounted sensors, internal control units, or the like. The actuation capability and the associated uncertainty estimate(s) may be determined based on a predefined model given one or more physical variables such as e.g. current speed, vehicle properties (vehicle dimensions, vehicle weight, etc.), road surface properties, and so forth, as readily understood by the skilled person in the art. The uncertainty estimates may be derived from predefined statistical models associated with each actuation parameters, where the actuation capability is given by the mean or mode value and the uncertainty estimate is given by e.g. one or two standard deviations above or below the mean.

In some embodiments, the candidate state parameters are deduced from a candidate trajectory 210 or candidate path 210 of the vehicle. In more detail, a path planning module of the ADS may output one or more candidate paths 210 or candidate trajectories 210, and the relevant candidate states 21 may be derived from these candidate paths 210 by isolating specific states of the vehicle along the candidate paths 210. An advantage of analysing candidate paths instead of candidate states directly is that it relieves the need for testing candidate states which might anyhow not be relevant (but which might have been included in a set of candidate states due to looser selection conditions). Another advantage of analysing candidate paths instead of candidate states directly the combinatorial factor of possible predicted scenes at each candidate state is reduced, which renders the whole method S100 more computationally efficient. In more detail, with the notion of analysing a candidate trajectory or candidate path instead of a single state, the time evolution of the predicted scene is also connected to the trajectory or path leading up to the candidate state. Conversely, when analysing the states directly, all possible predicted scenes pertaining to any trajectory leading to the state should be considered, even though only one of those trajectories or paths may have been relevant from the ADS's perspective. Thus, even in the case where the same state is reached with two different candidate paths or candidate trajectories this will still lead to less of a computational effort as it will only result in envelope of predictions across each scene corresponding to the two candidate paths.

Furthermore, each predicted scene 22 comprises a set of scene parameters of the surrounding environment of the vehicle and a scene probability metric of the scene occurring at an associated candidate state. The scene probability metric may be given from the compounded probability of various objects being at predicted locations at one or more moments in time defining the timing of the predicted scene. Thus, the probability metric may for example be a percentage defining the likelihood of the predicted scene occurring ranging from 0 % to 100 %. The probabilities of various objects in the surrounding environment of the vehicle being at predicted locations and/or performing predicted actions may for example be obtained from the aforementioned risk map.

In accordance with some embodiments, the set of scene parameters comprises one or more of:

- A predicted location of free-space areas in the surrounding environment of the vehicle and an uncertainty estimation for the predicted location of free-space areas.
- A predicted location of static external objects in the surrounding environment of the vehicle and an uncertainty estimation for the predicted location of the static external objects.

    o Static external objects include, but are not limited to, stationary/parked vehicles, buildings, road barriers, landmarks such as traffic lights and traffic signs, trees, and so forth.

- A predicted location of dynamic external objects in the surrounding environment of the vehicle and an uncertainty estimation for the predicted location of the dynamic external objects.

    o Dynamic external objects include other vehicles, pedestrians, and any other dynamic object in the perceivable range of the ADS.

- A predicted heading of the dynamic external objects in the surrounding environment of the vehicle and an uncertainty estimation for the predicted heading of the dynamic external objects.
- A set of predicted dynamical state parameters of the dynamic external objects in the surrounding environment of the vehicle and an uncertainty estimation for each predicted dynamical state parameter of the set of predicted dynamical state parameters of the dynamic external objects.

    o Dynamical state parameters include, but are not limited to, dimensions of the dynamic external objects, speed of the dynamic external objects, headings of the dynamic external objects, and trajectories of the dynamic external objects.

- A set of environmental conditions in the surrounding environment of the vehicle and an uncertainty estimation for each environmental condition of the set of environmental conditions in the surrounding environment of the vehicle.

    o Environmental conditions include, but are not limited to, lighting conditions, precipitation parameters, road friction parameters, and road geometry.

Further, each event 23 comprises an event probability metric of the event occurring in the predicted scene 22 and a set of event parameters of each event 23. In some embodiments, the set of event parameters comprises a perturbation of one or more scene parameters of the set of scene parameters, an uncertainty estimation for the perturbed one or more scene parameter. In some embodiments, the set of event parameters comprises a set of object parameters of a non-perceived external object, where the set of object parameters include a location of the non-perceived external object, a heading of the non-perceived external object, and a speed of the non-perceived external object. In other words, in some embodiments, the set of event parameters define an unexpected/aggressive manoeuvre of a perceived dynamic object and/or an appearance of an unexpected (non-perceived) object.

In some embodiments, the predicted scenes are determined S111 based on the currently perceived scene 220 of the ADS (i.e. the "worldview" of the ADS at a current state of the ADS), and the obtained candidate states 21. The candidate states 21 may as mentioned be directly received or derived S110 from the candidate paths/trajectories. Thus, the step of obtaining input data S101 may comprise a pre-processing step, where the candidate states 21 are either deduced S110 from the received candidate paths 210 or directly received. These together with the received perceived scene 220 are used to first derive S111 the predicted scenes 22 corresponding to each (derived or received) candidate state 21 and secondly used to derive S112 the relevant events 23. It should be noted that the derivation S111 of the predicted scenes is slightly more straight-forward (i.e. more computationally efficient) using candidate paths/trajectories rather than the candidate states 21 directly as discussed above.

Further, the method S100 comprises running S102 a probabilistic reliability method on each set of candidate state parameters, each set of scene parameters, the scene probability metric for each set of scene parameters, the set of event parameters, and the event probability metric for each set of event parameters so to estimate S103 a probability of each predefined incident occurring in the virtual test environment. It should be noted that the results from the simulation in the virtual test environment can be used as a proxy for the performance of the ADS in real-world contexts and thereby provide valuable input during the design and development stage of the ADS.

The probabilistic reliability method may for example be a structural reliability method, such as e.g. a subset simulation (may be abbreviated as SuS or SS) method. Structural reliability methods may be understood as advanced stochastic methods for estimating probabilities of rare failure events, and was originally developed within the field of engineering mechanics.

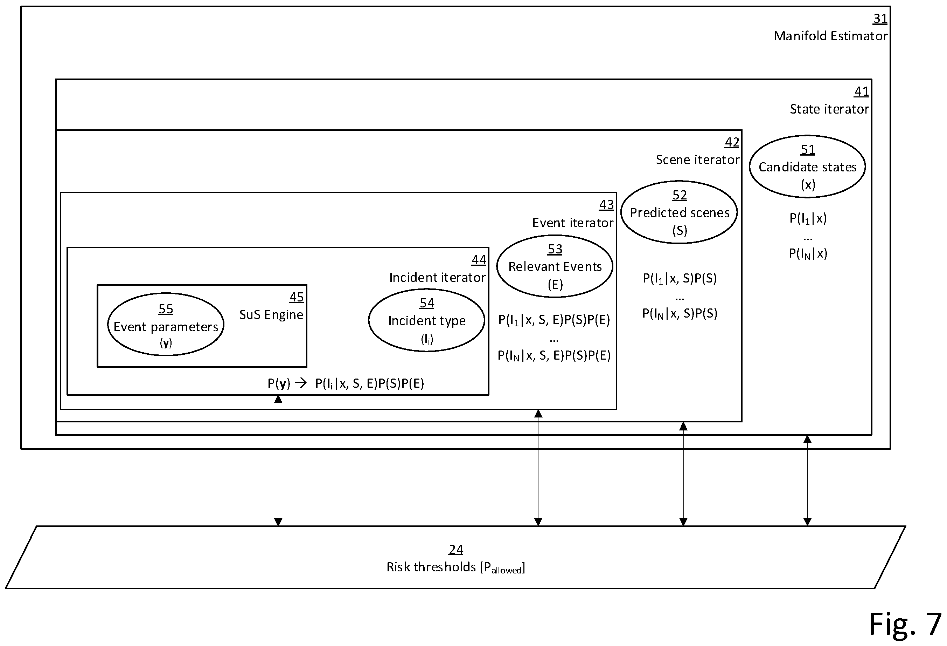

Due to their ability to efficiently transition scenario simulations towards the failure region in a high dimensional parameter space (which is the case for ADS simulations), the present inventors realized that it may be advantageously employed within software development and verification of ADSs. Furthermore, provided a simulation tool (software tool) and a multi-dimensional statistical model of the environment, structural reliability method simulations allow for efficiently estimating the probability of failure of an ADS. Since the failure rate estimations are based on statistical models that in turn are based on real traffic data, the failure rate estimations are highly relevant for the development and verification of ADS features. Further details related to the simulation system are given in reference to Fig. 7 below.

Moving on, the method S100 further comprises, for each candidate state that is associated with a predefined incident occurring with a probability exceeding the predefined allowable frequency of occurrence for that incident, determining S104 that candidate state as a high-risk state for the vehicle. Moreover, the method S100 comprises, for each candidate state that is associated with a predefined incident occurring with a probability below the predefined allowable frequency of occurrence for that incident, determining S105 that candidate state as an acceptable-risk state for the vehicle.

In some embodiments, the output of the simulation S102 is a "failure manifold", which may be understood as a subset of the candidate states that are associated with elevated second order risks and should therefore be avoided by the ADS. Thus, in some embodiments, the method S100 comprises estimating or forming S106 a failure manifold based on the outcome of the probabilistic reliability method. In general, a "manifold" is in the present context to be understood in a mathematical context, and may be construed as a collection of points forming a certain kind of set, such as those of a topologically closed surface or an analogue of this in three or more dimensions.

The parameters considered in a certain event (of a predicted scene for a candidate state) could be any combination of physical states with associated measures with a defined "direction" (e.g. higher velocity results in increased risk of severe injuries, higher steering wheel angle reduces the available manoeuvrability, etc.). The parameters considered could include position, velocity, acceleration, steering angle, etc. Since these have direction and a physical interpretation it is sufficient to produce a manifold pertaining to the failure region rather than a complete mapping of all relevant states and their associated second order risks, as states on one side of the manifold will have an acceptable level of second order risk whereas the other states will not. This can be illustrated as shown in the dotted box 120 of Fig. 1, which depicts an abstract manifold 123 in a 3D space with the "acceptable states" 121 on one side of the manifold 123 and the "high risk" (unacceptable) states 122 on the other side of the manifold 123.

Further, in some embodiments, the method S100 comprises updating S107 one or more design and/or model parameters of the ADS based on the determined S104 high-risk state(s) and/or the determined S105 acceptable state(s). In other words, the output from the simulation S102 may be used to update S107 one or more design and/or model parameters of the ADS. The model or design parameters may be understood as parameters of an underlying model of the surrounding environment or the ego-vehicle dynamics that the ADS uses to make decisions. The models may for example be machine learning algorithms, such as artificial neural networks, and the model parameters may accordingly be in the form of network weights. In more detail, a number of models may be involved in the decision making process of how the ADS is to manoeuvre in order to overtake or drive past a vehicle that is parked on a road shoulder with its hazard lights on. Then the output from the simulation S102 may be used to update those models so to avoid the candidate states that are determined to be high-risk states, thereby effectively improving the overall safety of the ADS.

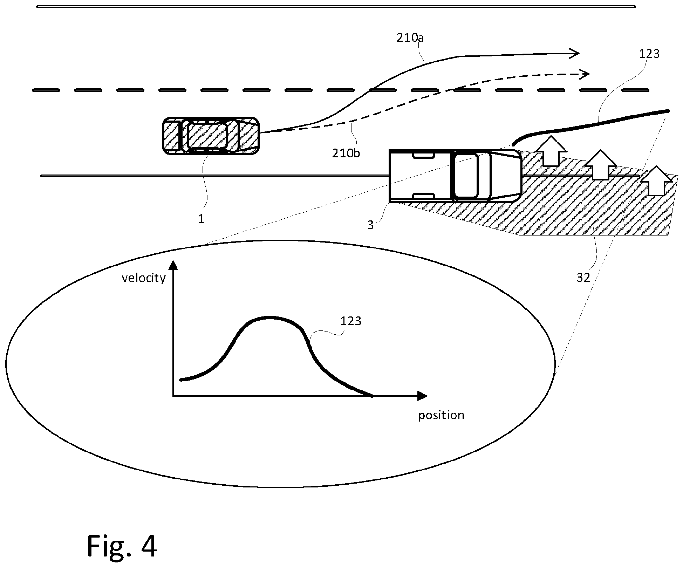

Analogously, the output from the simulation S102 may be used to update those models so to avoid unnecessarily "uncomfortable" manoeuvres, thereby improving passenger comfort while still fulfilling safety requirements. This type of "update" is schematically illustrated in Fig. 4, which is a top-view illustration of an ADS-equipped vehicle 1 located on a road portion with an external vehicle 3 at stand-still that is located in front of the ADS-equipped vehicle 1 causing an occluded area to be formed 32 in front of the stationary vehicle 3. In more detail, Fig. 4 shows how the failure manifold 123 may be used to change the planned path or trajectory of the ADS, where 210a depicts the candidate path as output by the ADS before the formation of the failure manifold 123 and 210b depicts the candidate path as output by the ADS after the formation of the failure manifold 123. The states included in the failure manifold 123 here include not only positions but also the velocity of the ADS-equipped vehicle at each point.

As mentioned, in some embodiments, the candidate state parameters are deduced from a candidate trajectory 210 or candidate path 210 of the vehicle. Fig. 3b is a schematic top-view illustration showing how a number of different candidate paths 210 can be used to generate a set of candidate states 21 that are provided as input to the simulation system running the probabilistic reliability method. In the depicted scenario of Fig. 3b, the circled area 36 denotes an area in the scenario that is associated with an "unknown" risk that would be of interest to quantify in order to estimate the second order risk that the ADS-equipped vehicle 1 is exposed to.

In more detail, a number of different candidate paths 210 are analysed and cross-referenced with a high-risk zone 36 within which there is a need for a failure manifold analysis (e.g. based on high-risk levels indicated by the aforementioned risk map). This need may for example be identified based on the proximity to the occluded area 32 and the relative risks associated with this area 32 as indicated by a risk map. Then, each of the resulting candidate states 21 are associated with their own set of predicted scenes, such as the one illustrated in Fig. 3c. Moreover, when iterating across all candidate states 21 all "relevant" predicted scenes are considered. Here the term "relevant" refers to a predicted scene with a sufficient probability such that the product of the scene probability with the probability of the events analysed are able to contribute to the overall second order risk-level in such a way that it is meaningful to continue the analysis. For example, there may be no need to consider a predicted scene with probability of $<10^{-6}h^{-1}$ for an event (let us say a moose running out from the occluded area 32, which is assumed to have a base probability of $<10^{-4}h^{-1}$ and the ADS is capable of avoiding a collisions with a moose in 9 out of 10 cases in general) if the lowest associated accepted risk level for this type of incident is $10^{-8}h^{-1}$ (where incidents here refer to a crash at any speed with the moose), as defined in the QRN.

Fig. 3c is an example illustration of how a predicted scene for a specific candidate state 21 is formed. In more detail, the patterned areas 33a, 33b, 33c indicate a probability of occupancy by the external vehicle 2 when the ego-vehicle 1 is in the candidate state 21. In other words, the patterned areas can be construed as a detailing of the predicted scene. Here, the different patterns indicate a different level of probability of occupancy, where the "darker" areas 33a correspond to a higher probability than the "lighter" areas 33c. The middle area 33b correspond to a probability value between the other two 33a, 33c.

Accordingly, the predicted scene is important to include in the input data in order to capture the potential influence from all of the objects in the surrounding environment of the ego-vehicle. For example, the predicted scene depicted in Fig. 3c may take different forms depending of the actions of the ADS during the temporal development of the scene from the ego-vehicle's current position to the candidate state.

Executable instructions for performing these functions are, optionally, included in a non-transitory computer-readable storage medium or other computer program product configured for execution by one or more processors.

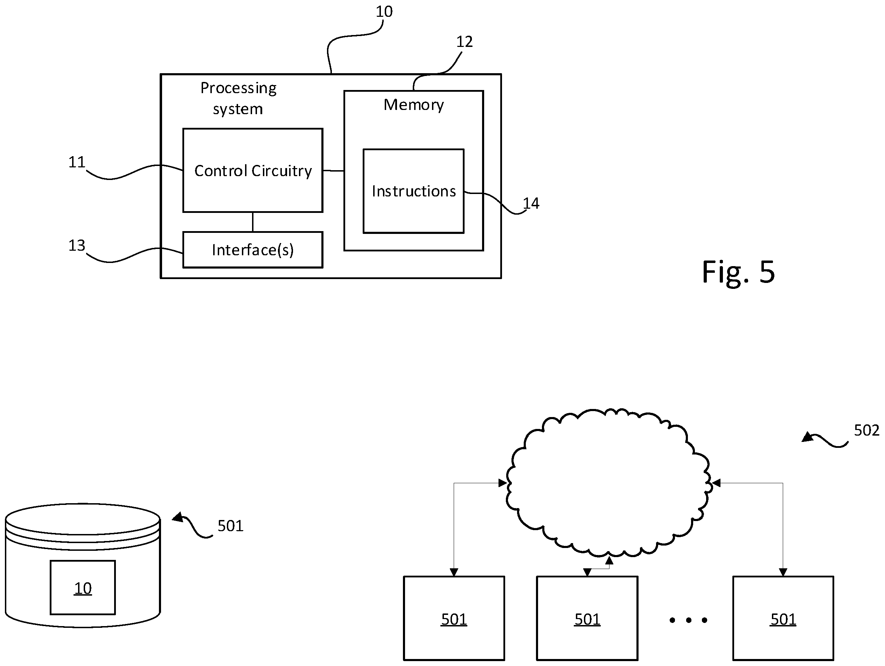

Fig. 5 is a schematic block diagram representation of a processing system 10 for estimating a risk exposure of a vehicle equipped with an automated driving system (ADS) in a virtual test environment in accordance with some embodiments. The processing system 10 comprises control circuitry 11 (may also be referred to as control unit, controller, one or more processors), a memory 12, a communication interface 13, and any other conventional components/functions required for performing the methods according to any one of the embodiments disclosed herein. In other words, executable instructions 14 for performing these herein disclosed functions are, optionally, included in a non-transitory computer-readable storage medium 12 or other computer program product configured for execution by one or more processors 11.

Accordingly, the control circuitry 11 configured to obtain input data (e.g. from an associated memory device 12) comprising at least one candidate state of the vehicle, where each candidate state comprises a set of candidate state parameters of the vehicle. The input data further comprises at least one predicted scene of the surrounding environment of the vehicle at each candidate state, where each predicted scene comprises a set of scene parameters of the surrounding environment of the vehicle and a scene probability metric of the scene occurring at an associated candidate state. Furthermore, the input data comprises at least one event for each predicted scene, where each event comprises an event probability metric of the event occurring in the predicted scene and a set of event parameters of each event. The input data further comprises a set of risk thresholds, wherein each risk threshold defines a predefined allowable frequency of occurrence of each of a plurality of predefined incident, where each incident defines a potential traffic incident that the vehicle could be exposed to during a predicted temporal development of each event.

The control circuitry 11 is further configured to estimate a probability of each predefined incident occurring in the virtual test environment by running a probabilistic reliability method based on each set of candidate state parameters, each set of scene parameters, the scene probability metric for each set of scene parameters, the set of event parameters, and the event probability metric for each set of event parameters. Then, for each candidate state that is associated with a predefined incident occurring with a probability exceeding the predefined allowable frequency of occurrence for that incident, the control circuitry 11 is configured to determine that candidate state as a high-risk state for the vehicle, and for each candidate state that is associated with a predefined incident occurring with a probability below the predefined allowable frequency of occurrence for that incident, the control circuitry 11 is configured to determine that candidate state as an acceptable-risk state for the vehicle.

Fig. 5 also depicts a remote server 501 comprising a processing system 10 according to some embodiments, and a cloud environment 502 comprising one or more remote servers 501 according to some embodiments.

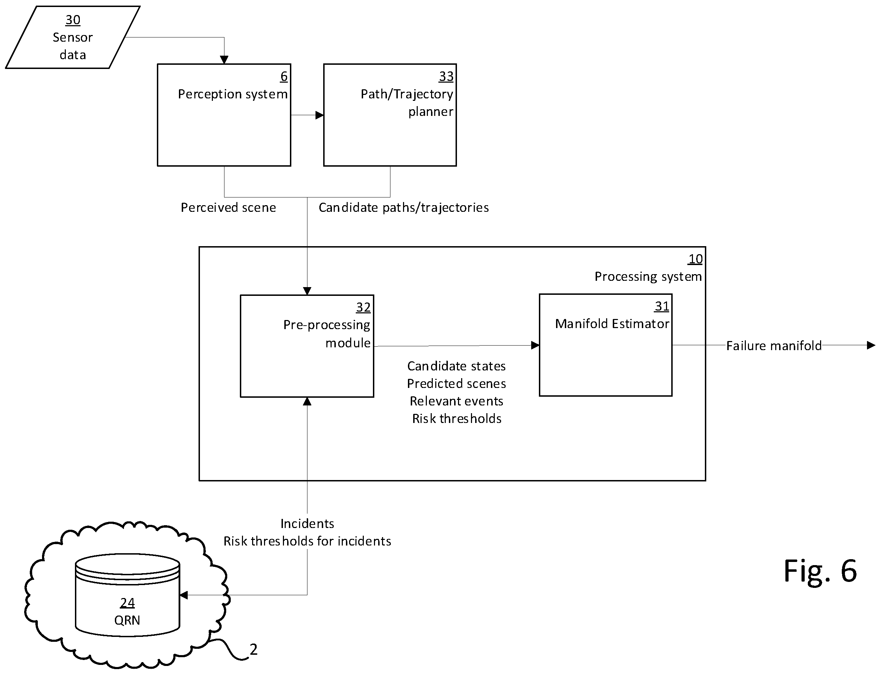

Fig. 6 is another schematic block diagram representation of a processing system 10 for estimating a risk exposure of a vehicle equipped with an automated driving system (ADS) in a virtual test environment in accordance with some embodiments. Further, the schematically depicted processing system 10 of Fig. 6 serves to elucidate some sub-modules or subcomponents that are included in accordance with some embodiments, and the flow of information/data between the various modules or components.

Moreover, Fig. 6 illustrates an example of embodiment of how the predicted scenes and candidate states, serving as input to the simulation, may be produced. As mentioned in the foregoing, the candidate states may be derived from candidate paths/trajectories as determined by a path planning or trajectory planning module 33 of the ADS. Thus, the generated candidate paths/trajectories may be provided as an input to a pre-processing module 32 that is configured to extract the relevant candidate states. Furthermore, the pre-processing step may include deriving the predicted scenes for the candidate states based on the perceived scenes of the ADS. In other words, one may utilize the ADS's perception system/module 6 in order to generate a perceived scene based on sensor data that has been obtained from real-life traffic scenarios. These perceived scenes may then be used to generate a predicted scene for a specific candidate state.

Moreover, as elaborated upon in the foregoing, the derivation of the predicted scenes based on the perceived scenes may be simplified by utilizing candidate paths/trajectories instead of relying on directly obtained candidate states. In more detail, with the notion of analysing a candidate trajectory or candidate path instead of a single state, the time evolution of the predicted scene is also connected to the trajectory or path leading up to the candidate state. Conversely, when analysing the candidate states directly, all possible predicted scenes pertaining to any trajectory leading to the state should be considered, even though only one of those trajectories or paths may have been relevant from the ADS's perspective.

Accordingly, the candidate paths/trajectories may be used to derive the candidate states, and these are then used together to facilitate the generation of the predicted scenes from the perceived scenes, where the predicted scenes correspond to each (derived or otherwise obtained) candidate state. The predicted scenes possible at each candidate state may then be used to determine relevant simulation scenes. The relevant events may for example be retrieved from an appropriate database (e.g. derived from a QRN 24). The QRN 24 is also used to obtain the set of risk thresholds necessary for the formation of the failure manifold. Then, this dataset is used as an input to a manifold estimator 31 configured to generate the failure manifold.

The manifold estimator 31 is accordingly configured to run a probabilistic reliability method on each set of candidate state parameters, each set of scene parameters, the scene probability metric for each set of scene parameters, the set of event parameters, and the event probability metric for each set of event parameters. The probabilistic reliability method may be in the form of a subset simulation method, which in turn may be realized through a five layered simulation depicted in Fig. 7. Accordingly, the manifold estimator 31 may in accordance with some embodiments, be configured to run a five layered simulation as depicted in Fig. 7.

The QRN may be understood as a database comprising a "budget" of frequencies allowed for a certain type of incident (e.g. ADS in conflict with a VRU, ADS crash into another vehicle at velocity $\varepsilon$ [30, 60) km/h). Accordingly, there is a need for a simulation system to account for all of these incident types. Therefore, in order to find the probability of failure with respect to each of those incidents as defined by the QRN (or any other comparable source of information) one can, in accordance with some embodiments, run a subset simulation method as depicted in Fig. 7. The subset simulation allows for estimating the probability of failure of the ADS in various scenarios with different severity levels (e.g. collisions with minor injuries, moderate injuries, and fatal injuries).

In more detail, the QRN may be based on a safety norm, which is a type of statistical goal, that in principle states the highest acceptable frequency of failures resulting in accidents having a given severity level. In the automotive industry this norm may be translated to the Automotive Safety Integrity Level (ASIL) of safety goals using the ISO26262 standard, based on estimates of severity, exposure, and controllability of a failure.

As an example, the highest integrity (ASIL D) is sought towards failures in situations that are common (exposure level E4), difficult to control (controllability level C3), and which can lead to accidents resulting in severe injuries or death (severity level S3). The safety goals (i.e. requirements) that are formulated to ensure that such failures do not occur, are thus assigned with ASIL D in accordance with ISO26262. This effectively means that the safety goal should have an estimated failure rate of less than $10^{-9}$ failures/hour. For failures associated with severity levels S2 (survival of involved actors probable) or S1 (light/moderate injuries), given the same exposure level (E4) and controllability level (C3), results in ASIL C and ASIL B, which can be translated to acceptable failure rates of $10^{-8}$ and $10^{-7}$ failures/hour respectively. Thus, for the sake of simplicity and readability, the severity levels discussed herein will be based on the severity level definitions as provided by the ASIL scheme.

In determining the severity of an outcome of the simulation, one may for example map a certain outcome and the corresponding severity (e.g. a collision with a vehicle at 50 km/h results in an S2 injury). Accordingly, the "QRN" may comprise such a predefined mapping between a certain outcome and the corresponding severity level. Therefore, by including this type of mapping in the formation of the QRN, the resulting requirements can be transformed into an allowable frequency of occurrence for specific incidents.

Fig. 7 is a schematic block diagram representation of a simulation architecture in accordance with some embodiments. In more detail, Fig. 7 shows the different iteration levels 41-44 of the proposed simulation system 31. In each level the relevant parameters are iterated, and the derived probabilities are summed up through the law of total probability. The probabilities obtained at each level of iteration 41-44 are compared to the level in the QRN 24. If a violation is found that specific iteration can be stopped as a failure state (high risk state) has been identified.

In the innermost level (incident iterator 44) of the simulation architecture depicted in Fig. 7, handles the search across the parameters of the simulated/analysed event and the given predicted scene - i.e. the parameter space $\vec{y}$ (denoted as **y** in Fig. 7). Each such search, results in an estimation of the probability of failure in relation to defined incident type $I_i$. The second and third iteration levels - i.e. the iterations pertaining to the predicted scene (scene iterator 42) and the events (event iterator 43), respectively - are preferably iterated in such a way that the configuration most likely to produce a violation of the thresholds ($P_{allowed}$) defined in the QRN 24 are considered first. This may for example be achieved by considering events associated with incidents that have a relatively low allowable frequency of occurrence ($P_{allowed}$) as defined in the QRN 24. Furthermore, if the probabilities computed at any level, i.e. the output of any iterator 41-44, is found to violate the allowable frequency of occurrence ($P_{allowed}$) as defined in the QRN 24, the simulation for that particular iteration level 41-44 can be stopped as a failure state (i.e. high-risk state) has been identified. In the architecture depicted in Fig. 7, it is assumed that the scenes are independent from the unknown event that is happening, i.e. P(E, S) = P(E)P(S).

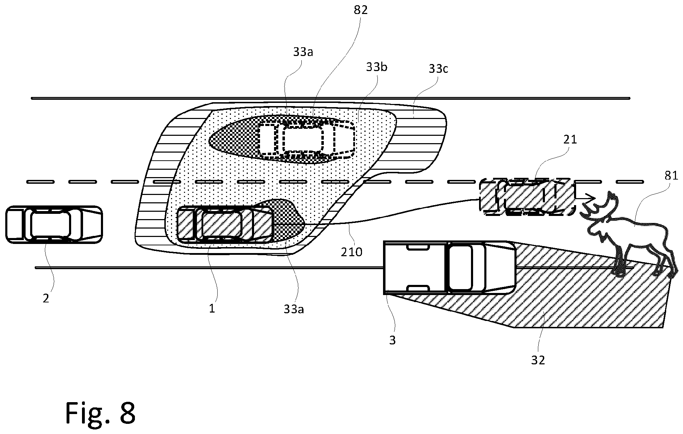

In order to further elucidate the simulation architecture 31, an illustrative example of a simulated scene is depicted in Fig. 8. More specifically, Fig. 8 illustrates a specific predicted scene for the obtained or otherwise derived candidate state 21, with one specific instance of the state of the external vehicle 2 (dynamic external object) having a predicted geographical position indicated by the broken-line vehicle 82. The candidate state 21 is indicated by the rightmost patterned vehicle. Moreover, in the depicted example, the event is the appearance of a non-perceived external object, here in the form of a moose 81, appearing from the previously occluded area 32.

The simulation system 31 has arrived at a specific point in the iteration across candidate states of the vehicle (i.e. the candidate state 21), and a specific predicted scene where the trailing vehicle 2 is predicted to be in a state denoted by the broken-line vehicle 82. Furthermore, the predicted scene including a set of scene parameters may further comprise a predicted speed of the external vehicle 2, a predicted heading of the external vehicle 2, as well as other scene parameters as discussed in the foregoing. Further, an event in the form of a moose 81 running out from the occluded area 32 behind the stationary vehicle 3 is considered in the simulated example. Thus, the system 31 will iterate across the incident types $I_1$ - $I_N$ (N being a positive integer $\geq$ 1) and subsequently search the parameter space $\vec{y}$, here including the potential actions of the external vehicle 2, the potential actions of the stationary vehicle 3 (which may start, but perhaps with a low probability of doing so), and the potential actions of the moose 81. The sub-set simulation across $\vec{y}$ will result in an estimate of the probability of failure for the specific incident $I_i$ that is considered in each iteration. An example of the output from the simulation is provided in table 1 below.

Table 1: Example of simulation output for a number of different incident types in relation to the scenario illustrated in Fig. 8.

| Incident type | Probability of failure [estimated] P($I_i$\|x, S, E)P(S)P(E) | QRN, $P_{allowed}(I_i)$ |
|---|---|---|
| $I_1$ = collision with moose [v > 70 km/h] | $10^{-14} h^{-1}$ | $10^{-11}\ h^{-1}$ |
| **$I_2$ = collision with moose [v $\in$ [30, 70) km/h]** | **$10^{-7}\ h^{-1}$** | **$10^{-8}\ h^{-1}$** |
| ... | ... | |
| $I_k$ = collision with car [v $\in$ [30, 70) km/h] | $10^{-9}\ h^{-1}$ | $10^{-6}\ h^{-1}$ |
| ... | | |

(continued)

| Incident type | Probability of failure [estimated] $P(I_i|x, S, E)P(S)P(E)$ | QRN, $P_{allowed}(I_i)$ |
|---|---|---|
| $I_m$ = near-collision with car distance at stand-still < 20 cm | $10^{-7}$ h$^{-1}$ | $10^{-4}$ h$^{-1}$ |
| .... | ... | ... |

Accordingly, Table 1 indicates the probability of failure of the ADS from the subset simulation corresponding to the realization of the scenario depicted in Fig. 8, and accordingly the risk exposure of the vehicle for that scenario. It should be noted that the probability of failure of the ADS pertaining to the incident, candidate state, predicted scene and event $P(I_i|x, S, E)$ is here multiplied by the probabilities of the predicted scene $P(S)$ and event $P(E)$ (i.e. probability of the scene occurring and the probability of the event occurring) in order to be able to directly compare to the allowable frequency of occurrence defined by the QRN ($P_{allowed}(I_i)$). In the example shown in Table 1, the estimated probability of failure for the second incident type ($I_2$) is estimated to be at $10^{-7}$ h$^{-1}$, and this is found to violate the threshold of allowable frequency of occurrence for that incident type ($10^{-8}$ h$^{-1}$). Thus, in some embodiments, the iteration for that candidate state could stop as the analysed candidate state 21 is a state with a too high second order risk. However, for the sake of the example, and to further clarify the simulation architecture, some additional rows of the table have been populated.

In order to increase the computational efficiency of the simulation, one can order the set of incidents for iteration by dividing the allowed level as defined by the QRN with the probabilities of the event and the predicted scene in ascending order with the lowest number first. In other words, order the incidents by $\frac{P_{allowed}(i_i)}{P(S)P(E)}$. Thereby, one increases the chances of finding a failed incident early in the simulation effectively reducing the need for iterating across all possible incidents for each event in each predicted scene of each candidate state.

Further, in order to obtain a "final" estimate of the risk exposure of the ADS-equipped vehicle, and in particular of the second order risk for each candidate state, one may add the contributions from all event and predicted scenes for each incident. This may be performed based on the law of total probabilities, i.e. to get

$$P(I_i|x, S) = \sum_{j \in \mathbb{N}_E} P((I_i|x, S, E_j)P(E_j)$$, where $\mathbb{N}_E$ collects all relevant events.

The present invention has been presented above with reference to specific embodiments. However, other embodiments than the above described are possible and within the scope of the invention. Different method steps than those described above, performing the method by hardware or software, may be provided within the scope of the claims.

Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media—e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the processing system 10) may be or include any number of hardware components for conducting data or signal processing or for executing computer code 14 stored in memory 12. The processing system 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware. It will also be understood that, although the term first, second, etc. may be used herein to describe various elements, these elements should not be limited by these terms. These terms are only used to distinguish one element from another. For example, a first function could be termed a second function, and, similarly, a second function could be termed a first function.

The first function and the second function are both functions, but they are not the same function. Although the figures may show a specific order of method steps, the order of the steps may differ from what is depicted. In addition, two or more steps may be performed concurrently or with partial concurrence. Such variation will depend on the software and hardware systems chosen and on designer choice. The scope is defined by the claims.

Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the inventions as claimed in the below described patent claims should be apparent for the person skilled in the art.

**Claims**

1.  A computer-implemented method (S100) for estimating a risk exposure of a vehicle equipped with an automated driving system (ADS) in a virtual test environment, the method comprising:

    obtaining (S101) input data comprising:

    at least one candidate state of the vehicle, wherein each candidate state comprises a set of candidate state parameters of the vehicle,
    at least one predicted scene of the surrounding environment of the vehicle at each candidate state, wherein each predicted scene comprises a set of scene parameters of the surrounding environment of the vehicle and a scene probability metric of the scene occurring at an associated candidate state,
    at least one event for each predicted scene, wherein each event comprises an event probability metric of the event occurring in the predicted scene and a set of event parameters of each event,
    a set of risk thresholds, wherein each risk threshold defines a predefined allowable frequency of occurrence of each of a plurality of predefined incidents, wherein each predefined incident defines a potential traffic incident that the vehicle could be exposed to during a predicted temporal development of each event;

    estimating (S103) a probability of each predefined incident occurring in the virtual test environment by running (S102) a probabilistic reliability method on each set of candidate state parameters, each set of scene parameters, the scene probability metric for each set of scene parameters, the set of event parameters, and the event probability metric for each set of event parameters;
    for each candidate state that is associated with a predefined incident occurring with a probability exceeding the predefined allowable frequency of occurrence for that incident, determining (S104) that candidate state as a high-risk state for the vehicle; and
    for each candidate state that is associated with a predefined incident occurring with a probability below the predefined allowable frequency of occurrence for that incident, determining (S105) that candidate state as an acceptable-risk state for the vehicle.

2.  The method (S100) according to claim 1, wherein the probabilistic reliability method is a subset simulation method.

3.  The method (S100) according to claim 1 or 2, wherein the set of candidate state parameters of the vehicle comprises at least one of a geographical position of the vehicle, a heading of the vehicle, a set of vehicle state parameters, an ADS configuration of the vehicle, an actuation capability of the vehicle, vehicle dimensions, and a vehicle weight.

4. The method (S100) according to any one of claims 1-3, wherein the set of scene parameters comprises at least one of:

a predicted location of free-space areas in the surrounding environment of the vehicle and an uncertainty estimation for the predicted location of free-space areas;

a predicted location of static external objects in the surrounding environment of the vehicle and an uncertainty estimation for the predicted location of the static external objects;

a predicted location of dynamic external objects in the surrounding environment of the vehicle and an uncertainty estimation for the predicted location of the dynamic external objects;

a predicted heading of the dynamic external objects in the surrounding environment of the vehicle and an uncertainty estimation for the predicted heading of the dynamic external objects;

a set of predicted dynamical state parameters of the dynamic external objects in the surrounding environment of the vehicle and an uncertainty estimation for each predicted dynamical state parameter of the set of predicted dynamical state parameters of the dynamic external objects; and

a set of environmental conditions in the surrounding environment of the vehicle and an uncertainty estimation for each environmental condition of the set of environmental conditions in the surrounding environment of the vehicle.

5. The method (S100) according to any one of claims 1 - 4, wherein the set of event parameters comprises at least one of:

a perturbation of one or more scene parameters of the set of scene parameters, an uncertainty estimation for the perturbed one or more scene parameter; and

a set of object parameters of a non-perceived external object, the set of object parameters including a location of the non-perceived external object, a heading of the non-perceived external object, and a speed of the non-perceived external object.

6. The method (S100) according to any one of claims 1-5, wherein the candidate state parameters are deduced from a candidate trajectory of the vehicle.

7. The method (S100) according to any one of claims 1-6, further comprising:
updating (S107) one or more design and/or model parameters of the ADS based on the determined high-risk states and/or the determined acceptable states.

8. A computer-readable storage medium storing one or more programs configured to be executed by one or more processors of a processing system, the one or more programs comprising instructions for performing the method (S100) according to any one of the preceding claims.

9. A processing system (10) for estimating a risk exposure of a vehicle (1) equipped with an automated driving system (ADS) in a virtual test environment, the processing system comprising:
control circuitry (11) configured to:

obtain input data comprising:

at least one candidate state (21) of the vehicle, wherein each candidate state comprises a set of candidate state parameters of the vehicle,

at least one predicted scene (22) of the surrounding environment of the vehicle at each candidate state, wherein each predicted scene comprises a set of scene parameters of the surrounding environment of the vehicle and a scene probability metric of the scene occurring at an associated candidate state,

at least one event (23) for each predicted scene, wherein each event comprises an event probability metric of the event occurring in the predicted scene and a set of event parameters of each event,

a set of risk thresholds, wherein each risk threshold defines a predefined allowable frequency of occurrence of each of a plurality of predefined incident, wherein each incident defines a potential traffic incident that the vehicle could be exposed to during a predicted temporal development of each event;

estimate a probability of each predefined incident occurring in the virtual test environment by running a probabilistic reliability method based on each set of candidate state parameters, each set of scene parameters, the scene probability metric for each set of scene parameters, the set of event parameters, and the event probability metric for each set of event parameters;

for each candidate state (21) that is associated with a predefined incident occurring with a probability exceeding the predefined allowable frequency of occurrence for that incident, determine that candidate state as a high-risk state for the vehicle; and

for each candidate state that is associated with a predefined incident occurring with a probability below the predefined allowable frequency of occurrence for that incident, determine that candidate state as an acceptable-risk state for the vehicle.

10. The processing system (10) according to claim 9, wherein the probabilistic reliability method is a subset simulation method.

11. The processing system (10) according to any one of claims 9 or 10, wherein the set of event parameters comprises at least one of:

a perturbation of one or more scene parameters of the set of scene parameters, an uncertainty estimation for the perturbed one or more scene parameter; and

a set of object parameters of a non-perceived external object, the set of object parameters including a location of the non-perceived external object, a heading of the non-perceived external object, and a speed of the non-perceived external object.

12. The processing system (10) according to any one of claims 9 - 11, wherein the control circuitry (11) is further configured to:
update one or more design and/or model parameters of the ADS based on the determined high-risk states and/or the determined acceptable states.

13. A remote server (501) comprising the processing system according to any one of claims 9 - 12.

14. A cloud environment (502) comprising one or more remote servers (501) according to claim 13.

**Patentansprüche**

1. Rechnergestütztes Verfahren (S100) zum Schätzen einer Risikoexposition eines Fahrzeugs, das mit einem automatisierten Fahrsystem (ADS) in einer virtuellen Testumgebung versehen ist, wobei das Verfahren Folgendes umfasst:
Erlangen (S101) von Eingabedaten, umfassend:

mindestens einen in Betracht kommenden Zustand des Fahrzeugs, wobei jeder in Betracht kommende Zustand einen Satz in Betracht kommender Zustandsparameter des Fahrzeugs umfasst,
mindestens eine vorhergesagte Szene der umliegenden Umgebung des Fahrzeugs bei jedem in Betracht kommenden Zustand, wobei jede vorhergesagte Szene einen Satz von Szenenparametern der umliegenden Umgebung des Fahrzeugs und eine Szenenwahrscheinlichkeitsmetrik von Auftreten der Szene bei einem assoziierten in Betracht kommenden Zustand umfasst,
mindestens ein Ereignis für jede vorhergesagte Szene, wobei jedes Ereignis eine Ereigniswahrscheinlichkeitsmetrik von Auftreten des Ereignisses in der vorhergesagten Szene und einen Satz von Ereignisparametern jedes Ereignisses umfasst,
einen Satz von Risikoschwellenwerten, wobei jeder Risikoschwellenwert eine vordefinierte zulässige Häufigkeit von Auftreten jedes einer Vielzahl vordefinierter Unfälle definiert, wobei jeder vordefinierte Unfall einen möglichen Verkehrsunfall definiert, dem das Fahrzeug während einer vorhergesagten zeitlichen Entwicklung jedes Ereignisses ausgesetzt werden könnte;
Schätzen (S103) einer Wahrscheinlichkeit von Auftreten jedes vordefinierten Unfalls in der virtuellen Testumgebung durch Ausführen (S102) eines probabilistischen Zuverlässigkeitsverfahrens an jedem Satz in Betracht kommender Zustandsparameter, jedem Satz von Szenenparametern, der Szenenwahrscheinlichkeitsmetrik für jeden Satz von Szenenparametern, dem Satz von Ereignisparametern und der Ereigniswahrscheinlichkeitsmetrik für jeden Satz von Ereignisparametern;
für jeden in Betracht kommenden Zustand, der mit Auftreten eines vordefinierten Unfalls mit einer Wahrscheinlichkeit, die die vordefinierte zulässige Häufigkeit von Auftreten für diesen Unfall überschreitet, assoziiert ist, Bestimmen (S104) dieses in Betracht kommenden Zustands als einen Hochrisikozustand für das Fahrzeug; und
für jeden in Betracht kommenden Zustand, der mit Auftreten eines vordefinierten Unfalls mit einer Wahrscheinlichkeit unter der vordefinierten zulässigen Häufigkeit von Auftreten für diesen Unfall assoziiert ist, Bestimmen (S105) dieses in Betracht kommenden Zustands als einen Zustand mit akzeptablem Risiko für das Fahrzeug.

2. Verfahren (S100) nach Anspruch 1, wobei das probabilistische Zuverlässigkeitsverfahren ein Teilmengensimulationsverfahren ist.

3. Verfahren (S100) nach Anspruch 1 oder 2, wobei der Satz in Betracht kommender Zustandsparameter des Fahrzeugs mindestens eines geographischen Standorts des Fahrzeugs, einer Richtung des Fahrzeugs, eines Satzes von Fahrzeugzustandsparametern, einer ADS-Konfiguration des Fahrzeugs, einer Betätigungsfähigkeit des Fahrzeugs, Fahrzeugabmessungen und eines Fahrzeuggewichts umfasst.

4. Verfahren (S100) nach einem der Ansprüche 1-3, wobei der Satz von Szenenparametern mindestens eines von Folgendem umfasst:

einen vorhergesagten Standort von Freiraumbereichen in der umliegenden Umgebung des Fahrzeugs und eine Ungewissheitsschätzung für den vorhergesagten Standort von Freiraumbereichen;
einen vorhergesagten Standort statischer externer Gegenstände in der umliegenden Umgebung des Fahrzeugs und eine Ungewissheitsschätzung für den vorhergesagten Standort der statischen externen Gegenstände;
einen vorhergesagten Standort dynamischer externer Gegenstände in der umliegenden Umgebung des Fahrzeugs und eine Ungewissheitsschätzung für den vorhergesagten Standort der dynamischen externen Gegenstände;
eine vorhergesagte Richtung der dynamischen externen Gegenstände in der umliegenden Umgebung des Fahrzeugs und eine Ungewissheitsschätzung für die vorhergesagte Richtung der dynamischen externen Gegenstände;
einen Satz vorhergesagter dynamischer Zustandsparameter der dynamischen externen Gegenstände in der umliegenden Umgebung des Fahrzeugs und eine Ungewissheitsschätzung für jeden vorhergesagten dynamischen Zustandsparameter des Satzes vorhergesagter dynamischer Zustandsparameter der dynamischen externen Gegenstände; und
einen Satz von Umgebungsbedingungen in der umliegenden Umgebung des Fahrzeugs und eine Ungewissheitsschätzung für jede Umgebungsbedingung des Satzes von Umgebungsbedingungen in der umliegenden Umgebung des Fahrzeugs.

5. Verfahren (S100) nach einem der Ansprüche 1-4, wobei der Satz von Ereignisparametern mindestens eines von Folgendem umfasst:

eine Störung eines oder mehrerer Szenenparameter des Satzes von Szenenparametern, eine Ungewissheitsschätzung für den gestörten einen oder die gestörten mehreren Szenenparameter; und
einen Satz von Gegenstandsparametern eines nicht wahrgenommenen externen Gegenstands, wobei der Satz von Gegenstandsparametern einen Standort des nicht wahrgenommenen externen Gegenstands, eine Richtung des nicht wahrgenommenen externen Gegenstands und eine Geschwindigkeit des nicht wahrgenommenen externen Gegenstands beinhaltet.

6. Verfahren (S100) nach einem der Ansprüche 1-5, wobei die in Betracht kommenden Zustandsparameter aus einer in Betracht kommenden Bewegungsbahn des Fahrzeugs abgeleitet werden.

7. Verfahren (S100) nach einem der Ansprüche 1-6, ferner umfassend:
Aktualisieren (S107) eines oder mehrerer Gestaltungs- und/oder Modellparameter des ADS basierend auf den bestimmten Hochrisikozuständen und/oder den bestimmten akzeptablen Zuständen.

8. Rechnerlesbares Speichermedium, das ein oder mehrere Programme speichert, die dazu konfiguriert sind, durch einen oder mehrere Prozessoren eines Verarbeitungssystems ausgeführt zu werden, wobei das eine oder die mehreren Programme Anweisungen zum Durchführen des Verfahrens (S100) nach einem der vorhergehenden Ansprüche umfasst/umfassen.

9. Verarbeitungssystem (10) zum Schätzen einer Risikoexposition eines Fahrzeugs (1), das mit einem automatisierten Fahrsystem, ADS, in einer virtuellen Testumgebung versehen ist, wobei das Verarbeitungssystem Folgendes umfasst:
eine Steuerschaltung (11), die zu Folgendem konfiguriert ist:
Erlangen von Eingabedaten, umfassend:

mindestens einen in Betracht kommenden Zustand (21) des Fahrzeugs, wobei jeder in Betracht kommende Zustand einen Satz in Betracht kommender Zustandsparameter des Fahrzeugs umfasst,

mindestens eine vorhergesagte Szene (22) der umliegenden Umgebung des Fahrzeugs bei jedem in Betracht kommenden Zustand, wobei jede vorhergesagte Szene einen Satz von Szenenparametern der umliegenden Umgebung des Fahrzeugs und eine Szenenwahrscheinlichkeitsmetrik von Auftreten der Szene bei einem assoziierten in Betracht kommenden Zustand umfasst,

mindestens ein Ereignis (23) für jede vorhergesagte Szene, wobei jedes Ereignis eine Ereigniswahrscheinlichkeitsmetrik von Auftreten des Ereignisses in der vorhergesagten Szene und einen Satz von Ereignisparametern jedes Ereignisses umfasst,

einen Satz von Risikoschwellenwerten, wobei jeder Risikoschwellenwert eine vordefinierte zulässige Häufigkeit von Auftreten jedes einer Vielzahl vordefinierter Unfälle definiert, wobei jeder Unfall einen möglichen Verkehrsunfall definiert, dem das Fahrzeug während einer vorhergesagten zeitlichen Entwicklung jedes Ereignisses ausgesetzt werden könnte;

Schätzen einer Wahrscheinlichkeit von Auftreten jedes vordefinierten Unfalls in der virtuellen Testumgebung durch Ausführen eines probabilistischen Zuverlässigkeitsverfahrens basierend auf jedem Satz in Betracht kommender Zustandsparameter, jedem Satz von Szenenparametern, der Szenenwahrscheinlichkeitsmetrik für jeden Satz von Szenenparametern, dem Satz von Ereignisparametern und der Ereigniswahrscheinlichkeitsmetrik für jeden Satz von Ereignisparametern;

für jeden in Betracht kommenden Zustand (21), der mit Auftreten eines vordefinierten Unfalls mit einer Wahrscheinlichkeit, die die vordefinierte zulässige Häufigkeit von Auftreten für diesen Unfall überschreitet, assoziiert ist, Bestimmen dieses in Betracht kommenden Zustands als einen Hochrisikozustand für das Fahrzeug; und

für jeden in Betracht kommenden Zustand, der mit Auftreten eines vordefinierten Unfalls mit einer Wahrscheinlichkeit unter der vordefinierten zulässigen Häufigkeit von Auftreten für diesen Unfall assoziiert ist, Bestimmen dieses in Betracht kommenden Zustands als einen Zustand mit akzeptablem Risiko für das Fahrzeug.

10. Verarbeitungssystem (10) nach Anspruch 9, wobei das probabilistische Zuverlässigkeitsverfahren ein Teilmengensimulationsverfahren ist.

11. Verarbeitungssystem (10) nach einem der Ansprüche 9 oder 10, wobei der Satz von Ereignisparametern mindestens eines vom Folgendem umfasst:

eine Störung eines oder mehrerer Szenenparameter des Satzes von Szenenparametern, eine Ungewissheitsschätzung für den gestörten einen oder die gestörten mehreren Szenenparameter; und

einen Satz von Gegenstandsparametern eines nicht wahrgenommenen externen Gegenstands, wobei der Satz von Gegenstandsparametern einen Standort des nicht wahrgenommenen externen Gegenstands, eine Richtung des nicht wahrgenommenen externen Gegenstands und eine Geschwindigkeit des nicht wahrgenommenen externen Gegenstands beinhaltet.

12. Verarbeitungssystem (10) nach einem der Ansprüche 9-11, wobei die Steuerschaltung (11) ferner zu Folgendem konfiguriert ist:
Aktualisieren eines oder mehrerer Gestaltungs- und/oder Modellparameter des ADS basierend auf den bestimmten Hochrisikozuständen und/oder den bestimmten akzeptablen Zuständen.

13. Entfernter Server (501), umfassend das Verarbeitungssystem nach einem der Ansprüche 9-12.

14. Cloud-Umgebung (502), umfassend einen oder mehrere entfernte Server (501) nach Anspruch 13.

## Revendications

1. Procédé mis en œuvre par ordinateur (S100) pour estimer une exposition au risque d'un véhicule équipé d'un système de conduite automatisée (ADS) dans un environnement de test virtuel, le procédé comprenant :
l'obtention (S101) de données d'entrée comprenant :

au moins un état candidat du véhicule, dans lequel chaque état candidat comprend un ensemble de paramètres d'état candidat du véhicule,
au moins une scène prédite de l'environnement immédiat du véhicule à chaque état candidat, dans lequel chaque scène prédite comprend un ensemble de paramètres de scène de l'environnement immédiat du véhicule et une métrique de probabilité de scène de la scène se produisant dans un état candidat associé,

au moins un événement pour chaque scène prédite, dans lequel chaque événement comprend une métrique de probabilité d'événement de l'événement se produisant dans la scène prédite et un ensemble de paramètres d'événement de chaque événement,

un ensemble de seuils de risque, dans lequel chaque seuil de risque définit une fréquence d'apparition admissible prédéfinie de chacun d'une pluralité d'incidents prédéfinis, dans lequel chaque incident prédéfini définit un incident de circulation potentiel auquel le véhicule pourrait être exposé pendant un développement temporel prédit de chaque événement ;

l'estimation (S103) d'une probabilité que chaque incident prédéfini se produise dans l'environnement de test virtuel en exécutant (S102) un procédé de fiabilité probabiliste sur chaque ensemble de paramètres d'état candidat, chaque ensemble de paramètres de scène, la métrique de probabilité de scène pour chaque ensemble de paramètres de scène, l'ensemble de paramètres d'événement et la métrique de probabilité d'événement pour chaque ensemble de paramètres d'événement ;

pour chaque état candidat qui est associé à un incident prédéfini se produisant avec une probabilité dépassant la fréquence d'apparition admissible prédéfinie pour cet incident, la détermination (S104) de cet état candidat comme étant un état à haut risque pour le véhicule ; et

pour chaque état candidat qui est associé à un incident prédéfini se produisant avec une probabilité inférieure à la fréquence d'apparition admissible prédéfinie pour cet incident, la détermination (S105) de cet état candidat comme étant un état à risque acceptable pour le véhicule.

2. Procédé (S100) selon la revendication 1, dans lequel le procédé de fiabilité probabiliste est un procédé de simulation de sous-ensemble.

3. Procédé (S100) selon la revendication 1 ou 2, dans lequel l'ensemble de paramètres d'état candidat du véhicule comprend au moins l'un parmi une position géographique du véhicule, un cap du véhicule, un ensemble de paramètres d'état de véhicule, une configuration ADS du véhicule, une capacité d'actionnement du véhicule, des dimensions de véhicule et un poids de véhicule.

4. Procédé (S100) selon l'une quelconque des revendications 1 à 3, dans lequel l'ensemble de paramètres de scène comprend au moins l'un parmi :

un emplacement prédit de zones d'espace libre dans l'environnement immédiat du véhicule et une estimation d'incertitude pour l'emplacement prédit de zones d'espace libre ;
un emplacement prédit d'objets externes statiques dans l'environnement immédiat du véhicule et une estimation d'incertitude pour l'emplacement prédit des objets externes statiques ;
un emplacement prédit d'objets externes dynamiques dans l'environnement immédiat du véhicule et une estimation d'incertitude pour l'emplacement prédit des objets externes dynamiques ;
un cap prédit des objets externes dynamiques dans l'environnement immédiat du véhicule et une estimation d'incertitude pour le cap prédit des objets externes dynamiques ;
un ensemble de paramètres d'état dynamique prédits des objets externes dynamiques dans l'environnement immédiat du véhicule et une estimation d'incertitude pour chaque paramètre d'état dynamique prédit de l'ensemble de paramètres d'état dynamique prédits des objets externes dynamiques ; et
un ensemble de conditions environnementales dans l'environnement immédiat du véhicule et une estimation d'incertitude pour chaque condition environnementale de l'ensemble de conditions environnementales dans l'environnement immédiat du véhicule.

5. Procédé (S100) selon l'une quelconque des revendications 1 à 4, dans lequel l'ensemble de paramètres d'événement comprend au moins l'un parmi :

une perturbation d'un ou de plusieurs paramètres de scène de l'ensemble de paramètres de scène, une estimation d'incertitude pour les un ou plusieurs paramètres de scène perturbés ; et
un ensemble de paramètres d'objet d'un objet externe non perçu, l'ensemble de paramètres d'objet comportant un emplacement de l'objet externe non perçu, un cap de l'objet externe non perçu et une vitesse de l'objet externe non perçu.

6. Procédé (S100) selon l'une quelconque des revendications 1 à 5, dans lequel les paramètres d'état candidat sont déduits d'une trajectoire candidate du véhicule.

**7.** Procédé (S100) selon l'une quelconque des revendications 1 à 6, comprenant en outre :
la mise à jour (5107) d'un ou plusieurs paramètres de conception et/ou de modèle de l'ADS sur la base des états à haut risque déterminés et/ou des états acceptables déterminés.

**8.** Support de stockage lisible par ordinateur stockant un ou plusieurs programmes configurés pour être exécutés par un ou plusieurs processeurs d'un système de traitement, les un ou plusieurs programmes comprenant des instructions pour mettre en œuvre le procédé (S100) selon l'une quelconque des revendications précédentes.

**9.** Système de traitement (10) pour estimer une exposition au risque d'un véhicule (1) équipé d'un système de conduite automatisée (ADS) dans un environnement de test virtuel, le système de traitement comprenant :
un circuit de commande (11) configuré pour :
obtenir des données d'entrée comprenant :

au moins un état candidat (21) du véhicule, dans lequel chaque état candidat comprend un ensemble de paramètres d'état candidat du véhicule,
au moins une scène prédite (22) de l'environnement immédiat du véhicule à chaque état candidat, dans lequel chaque scène prédite comprend un ensemble de paramètres de scène de l'environnement immédiat du véhicule et une métrique de probabilité de scène de la scène se produisant dans un état candidat associé,
au moins un événement (23) pour chaque scène prédite, dans lequel chaque événement comprend une métrique de probabilité d'événement de l'événement se produisant dans la scène prédite et un ensemble de paramètres d'événement de chaque événement,
un ensemble de seuils de risque, dans lequel chaque seuil de risque définit une fréquence d'apparition admissible prédéfinie de chacun d'une pluralité d'incidents prédéfinis, dans lequel chaque incident définit un incident de circulation potentiel auquel le véhicule pourrait être exposé pendant un développement temporel prédit de chaque événement ;
estimer une probabilité que chaque incident prédéfini se produise dans l'environnement de test virtuel en exécutant un procédé de fiabilité probabiliste sur la base de chaque ensemble de paramètres d'état candidat, chaque ensemble de paramètres de scène, la métrique de probabilité de scène pour chaque ensemble de paramètres de scène, l'ensemble de paramètres d'événement et la métrique de probabilité d'événement pour chaque ensemble de paramètres d'événement ;
pour chaque état candidat (21) qui est associé à un incident prédéfini se produisant avec une probabilité dépassant la fréquence d'apparition admissible prédéfinie pour cet incident, déterminer cet état candidat comme étant un état à haut risque pour le véhicule ; et
pour chaque état candidat qui est associé à un incident prédéfini se produisant avec une probabilité inférieure à la fréquence d'apparition admissible prédéfinie pour cet incident, déterminer (S105) cet état candidat comme étant un état à risque acceptable pour le véhicule.

**10.** Système de traitement (10) selon la revendication 9, dans lequel le procédé de fiabilité probabiliste est un procédé de simulation de sous-ensemble.

**11.** Système de traitement (10) selon l'une quelconque des revendications 9 ou 10, dans lequel l'ensemble de paramètres d'événement comprend au moins l'un parmi :

une perturbation d'un ou de plusieurs paramètres de scène de l'ensemble de paramètres de scène, une estimation d'incertitude pour les un ou plusieurs paramètres de scène perturbés ; et
un ensemble de paramètres d'objet d'un objet externe non perçu, l'ensemble de paramètres d'objet comportant un emplacement de l'objet externe non perçu, un cap de l'objet externe non perçu et une vitesse de l'objet externe non perçu.

**12.** Système de traitement (10) selon l'une quelconque des revendications 9 à 11, dans lequel les circuits de commande (11) sont en outre configurés pour :
mettre à jour un ou plusieurs paramètres de conception et/ou de modèle de l'ADS sur la base des états à haut risque déterminés et/ou des états acceptables déterminés.

**13.** Serveur distant (501) comprenant le système de traitement selon l'une quelconque des revendications 9 à 12.

**14.** Environnement cloud (502) comprenant un ou plusieurs serveurs distants (501) selon la revendication 13.

S100

24
QRN

21
Candidate
states

22
Predicted
scenes

23
Relevant
events

S101
Obtain input data

S102
Run simulation

S103
Estimate probability of incidents occuring

S104
Determine high-risk
states

S105
Determine
acceptable-risk states

S107
Update ADS

Fig. 1

120

123

121

122

Acceptable-
risk states

High-risk
states

S100

**S101**
Obtain input data

**S110**
Determine candidate states

**210**
Candidate paths

**S111**
Determine predicted scenes per candidate state

**220**
Perceived scene

**S112**
Retrieve relevant events

**24**
QRN

**S113**
Combine to simulation scope

**S102**
Run simulation

**S106**
Estimate failure manifold

**S103**
Estimate probability of incidents occuring

**S104**
Determine high-risk states

**S105**
Determine acceptable-risk states

**S107**
Update ADS

Fig. 2

Fig. 3a

Fig. 3b

Fig. 3c

Fig. 4

Fig. 5

501

502

EP 4 219 261 B1

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3940487 A1
- EP 20196794

**Non-patent literature cited in the description**

- **WARG.** *The Quantiative Risk Norm - A proposed Tailoring of HARA for ADS*